# EUROPEAN PATENT APPLICATION

(11) **EP 1 255 009 A1**
(43) Date of publication of application: **06.11.2002**
(21) Application number: 02009540.2
(22) Date of filing: 26.04.2002
(51) Int. Cl.: E05B 73/00

(54) **Device for supporting an antitheft tag for spectacles**

(30) Priority: 03.05.2001 IT VI20010098
(71) Applicant: Lorenplast di Lorenzi G. & C. s.n.c., 36073 Spagnago di Cornedo Vicentino (Vicenza) (IT)
(72) Inventor: Lorenzi, Gabriele, 36073 Spagnago Di Cornedo Vicentino (VI) (IT)
(74) Representative: Bettello, Pietro, Dott. Ing.

(57) **Abstract**

Regards a device for supporting an antitheft tag, to be applied to the temple of glasses put on sale, of the type which comprises a boxed body, applied to the outer part of the temple and fixed through a bridge housing, against which the temple itself is locked through a threaded clamp. Such a device is characterised in that the threaded clamp is totally enclosed inside the boxed body.

## Description

The finding regards a device for supporting an antitheft tag to be applied to the temple of glasses put on sale.

Nowadays, there is widespread use of antitheft tags applied on the frame of glasses so that, if a dishonest customer leaves the shop without taking care of the deactivation of the tag, said tag causes the emission of an alarm signal.

At the current state of the art various systems for supporting an antitheft tag are used, which use different methods for fixing it to the temple of glasses: from a simple strip to complex electromechanical mechanisms, based upon snap devices or through the manoeuvring, through personalised keys, of threaded clamps.

As an example we quote patent documents VI98U00046, EP-A-0943766, WO-A-99/36653 and VI2000A000077.

The purpose of the present finding is that of realising a device for supporting antitheft tags to be applied to the temple of glasses, of the type comprising a threaded clamp, which, besides preventing a dishonest person from easily identifying the manoeuvring key, which allows the opening and closing of the clamp from the temple, is also constructively simpler and is substantially smaller with respect to suchlike products of the known type.

Specifically, the purpose of the present finding is that of realising an antitheft device of the threaded clamp type which, when it is applied to the temple of glasses, does not have protrusions towards the inside of the temple itself, so as not to cause bother to the customer's temple, when he puts on the glasses to try them out.

A further purpose of the finding is that of allowing the salesperson to open the support device for the antitheft tag quickly and with the maximum ease.

Such purposes are achieved mainly by foreseeing that the device according to the finding be characterised in that the threaded clamp is totally enclosed inside the boxed body, containing the antitheft tag, such as an electronic detector or another element suitable for the task, and which is applied to the outer part of the temple and fixed through a bridge housing, against which the temple itself is locked.

Moreover, the screwing in of the threaded dowel of the clamp takes place through an opening formed on the boxed body, advantageously facing outwards from the temple.

Finally, the finding foresees that the aforementioned opening also be covered with a removable plate which is removed only at the moment of use of the key, which therefore makes it impossible for a dishonest person to discover the profile of the keyhole.

The plate can be used as a price-indicating tag or as an advertising logo, thus increasing the aesthetical aspect of the object.

The finding shall be better defined through the description of a possible embodiment thereof, given only as a nonlimiting illustrative example, with the help of the attached tables of drawings, where:
- fig. 1 represents a perspective view from the outside of an eyeglass temple, equipped with the device according to the finding;
- fig. 2 represents a perspective view from the inside of the temple according to fig.1;
- figs.3 and 4 represent a section view according to the line III-III of fig. 1 and a front view, respectively, of the device according to the finding.

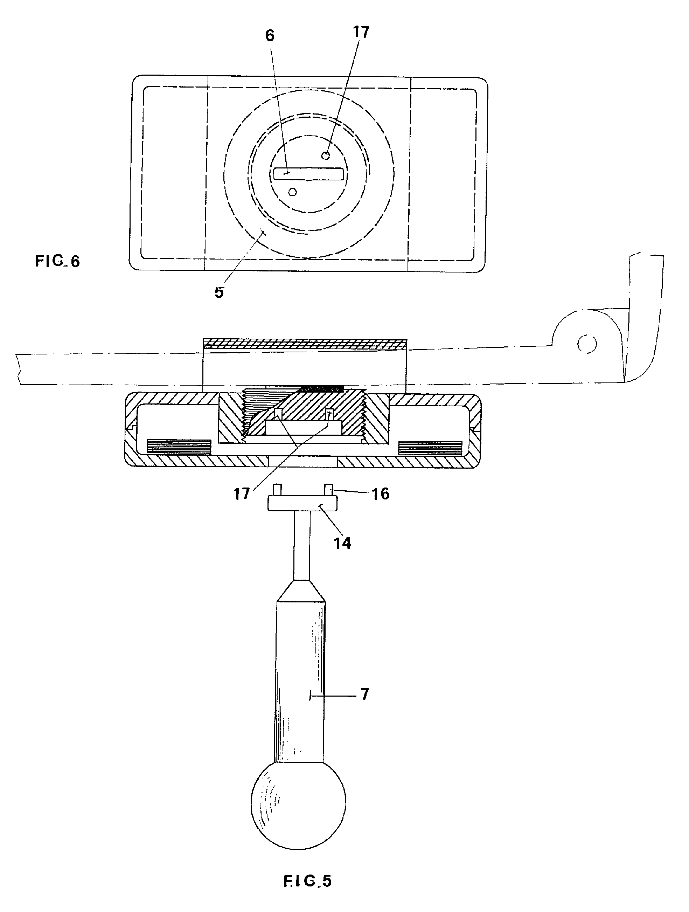

- figs. 5 and 6 represent a section view according to the line III-III of fig. 1 and a front view, respectively, of the device according to the finding, which uses a key with a shaped profile.

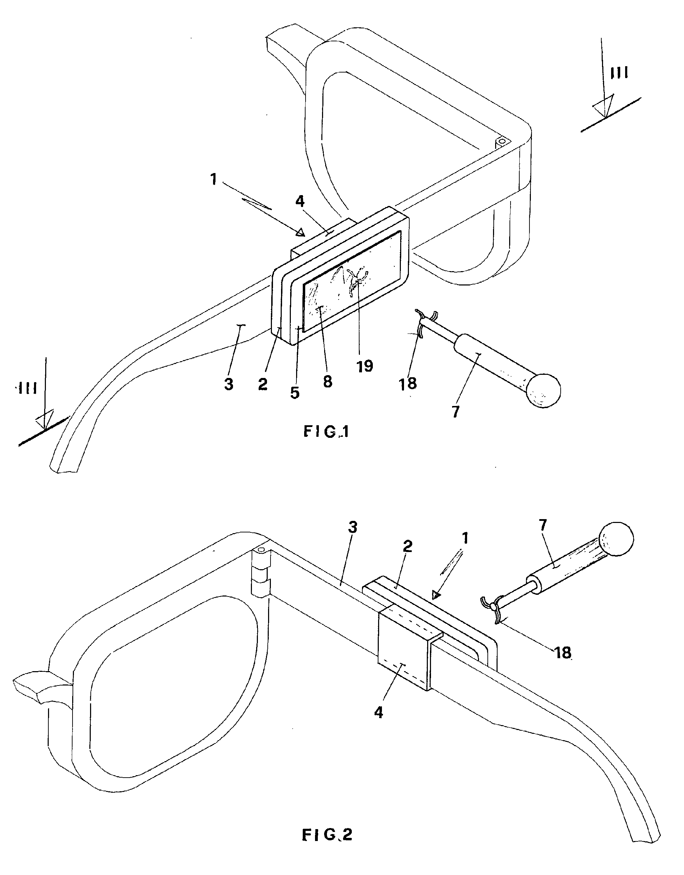

As can be seen in figs. 1 and 2, the device for supporting the antitheft tag, wholly identified with the reference numeral 1, consists of a boxed body 2, applied resting upon the outside of the temple 3 of the glasses and equipped with a bridge 4 in which the temple itself is housed locking therein.

On the outer wall 5 of the body 2 is formed the slit 6, which constitutes the keyhole of a lock in which the key 7 is slotted to lock the aforementioned body to the temple 3 and which is covered with a removable plate 8.

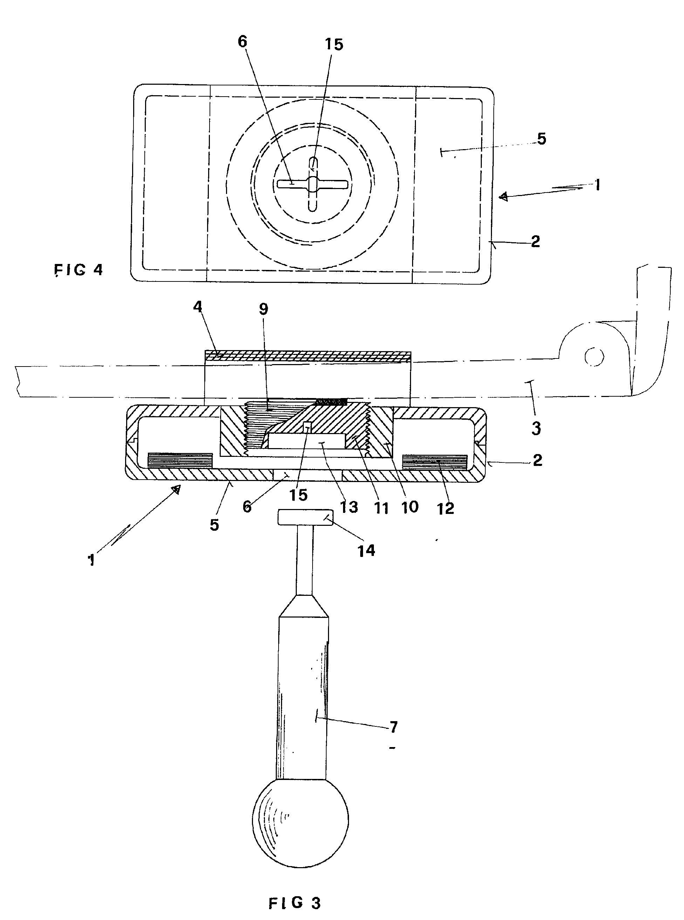

As can be seen in fig. 3 the entire threaded clamp 9, consisting of the hub 10, formed on the body 2 and of the dowel 11, is completely enclosed inside the aforementioned body, together with the antitheft tag 12.

The key 7, once slotted into the keyhole, has the possibility of turning freely upon itself given that a circular cavity 13 has been formed on the head of the threaded dowel 9, so as to allow the coupling of the engagement part 14 of the key with the corresponding profile 15, again formed on the head of the dowel itself and whatever position it is in, allowing the operator to turn the aforementioned dowel until the complete locking of the temple 3 against the wall of the bridge 4.

To counteract the action of any dishonest person who tries to open the antitheft tag through a fake key, the finding foresees that the engagement part 14 of the key, at the disposal of the salespeople, has a particularly complex configuration and is therefore difficult to reproduce accurately.

A configuration which satisfies such a need is that of foreseeing that on the engagement part 14 of the key at least two pins 16 protrude which, after the key has been inserted into the keyhole 6, slot into holes 17 which constitute the profile formed on the head of the threaded dowel.

The advantage of such a constructive solution derives from the fact that the holes 17 of the profile, when the key is removed from the tag, cannot be seen from the outside since they are covered by the outer wall 5 of the body of the tag.

Another possible configuration which satisfies the same need is that of foreseeing the engagement part of the key to consist of a plurality of elements 18, arranged radially and suitably shaped which, after the key has been inserted into the keyhole, also having a shaped opening in accordance with the size of the aforementioned elements, slot into the corresponding profile 19, formed on the head of the threaded dowel.

The advantage of such a second constructive solution derives from the fact that the whole of the elements 18, which constitute the engagement part of the key, due to their particular and exclusive shape, cannot be reproduced with accuracy such as to replace the original key.

Finally, the finding foresees that the bridge 4 be realised with a transparent material so as to make the entire temple of the glasses visible.

Obviously, different embodiments to the one described are possible without straying from the scope of the claims defined hereafter.

## Claims

1. DEVICE FOR SUPPORTING AN ANTITHEFT TAG, TO BE APPLIED TO THE TEMPLE OF GLASSES PUT ON SALE, of the type which comprises a boxed body, applied to the outer part of the temple and fixed through a bridge housing, against which the temple itself is locked through a threaded clamp,
said device **characterised in that** the threaded clamp is totally enclosed inside the boxed body.

2. DEVICE, according to claim 1, **characterised in that** the screwing in of the threaded dowel of the clamp takes place through an opening, formed on the boxed body, facing towards the outside of the temple.

3. DEVICE, according to claims 1 and 2, **characterised in that** the opening for the introduction of the key for screwing in the clamp is covered by a removable plate.

4. DEVICE (1), according to claim 1, consisting of a boxed body (2), applied resting upon the outside of the temple (3) of the glasses and equipped with a bridge (4) in which the temple itself is housed locking therein, **characterised in that** on the outer wall (5) of the body (2) the slit (6) is formed, which constitutes the keyhole of a lock in which the key (7) is slotted to lock the aforementioned body to the temple.

5. DEVICE, according to claim 4, **characterised in that** the entire threaded clamp (9), consisting of the hub (10), formed on the body (2) and of the dowel (11), is contained inside the aforementioned body, together with the antitheft tag (12).

6. DEVICE, according to claims 4 and 5, **characterised in that** on the head of the threaded dowel (9) a circular cavity (13) has been formed so as to allow the key (7), once slotted into the keyhole, to turn freely upon itself until its engagement part (14) slots into the profile (15), again formed on the head of the dowel itself.

7. DEVICE, according to claim 6, **characterised in that** on the engagement part (14) of the key at least two pins (16) protrude which, after the key has been inserted into the keyhole (6), slot into the holes (17) which constitute the profile formed on the head of the threaded dowel.

8. DEVICE, according to claim 6, **characterised in that** the engagement part of the key consists of a plurality of suitably shaped elements (18) arranged radially which, after the key has been inserted into the keyhole, which also has a shaped opening in accordance with the size of the aforementioned elements, slot into the corresponding profile (19), formed on the head of the threaded dowel.

9. DEVICE, according to one or more of the previous claims, **characterised in that** the bridge (4) is realised with a transparent material.
